# EUROPEAN PATENT SPECIFICATION

(11) **EP 2 382 825 B1**
(45) Date of publication and mention of the grant of the patent: **11.10.2017**
(21) Application number: 09805945.4
(22) Date of filing: 22.12.2009
(51) Int. Cl.: H04W 8/12

(54) **AN ACCIDENTAL ROAMING PREVENTION AND CORRECTION SYSTEM**
SYSTEM ZUR VERHINDERUNG UND KORREKTUR VON VERSEHENTLICHEM ROAMING
SYSTÈME DE PRÉVENTION ET DE CORRECTION D'ITINÉRANCE ACCIDENTELLE

(30) Priority: 30.12.2008 TR 200810015
(43) Date of publication of application: 02.11.2011
(73) Proprietor: Turkcell Teknoloji Arastirma & Gelistirme A.S., 41470 Kocaeli (TR)
(72) Inventor: OKUROGLU, Bahri, 41470 Kocaeli (TR)
(74) Representative: Carangelo, Pierluigi
(86) International application number: PCT/IB2009/055910
(87) International publication number: WO 2010/076742

(56) References cited:
- EP-A1- 1 903 828
- WO-A2-02/11484
- WO-A2-2004/014101
- US-A1- 2006 135 160
- US-B1- 6 643 511
- US-B1- 7 440 756

## Description

### Field of the Invention

The present invention relates to an accidental roaming prevention and correction system, which, when GSM (Global System for Mobile Communications) subscribers receive service from neighboring country operators at the national borders due to instant problems at the main network (HPLMN) or network interference, automatically recovers the subscribers to the local network (HPLMN) when the problems in the local network are resolved.

### Prior Art

In GSM networks, all information of the subscribers is stored in a node called HLR (Home Location Register). In each region of the GSM network, there are MSC (Mobile Switching Center) and VLR (Visitor Location Register) nodes which keep a record of the subscribers located in the concerned region and provide service to them. To each MSC a different number of BSC's (Base Station Controller) and to each BSC a different number of BSS's (Base Station Subsystem) are connected.

In local roaming, when a subscriber terminal wants to receive service from a new VLR belonging to the operator providing the service, VLR informs HLR of the subscriber that the subscriber is located in the service area of the VLR. When HLR confirms this, it changes the active VLR information recorded in the database for the subscriber whereby ensuring that the new calls are sent to the said VLR. This infrastructure is defined with GSM standards and the message sent by the VLR to the HLR regarding the location of the subscriber is an Update Location MAP (Mobile Application Part) message.

Operators make roaming agreements with each other in order to enable GSM subscribers to receive service outside their home countries. Within the scope of these agreements, operators of the foreign countries provide service to subscribers on behalf of the home GSM networks of the subscribers.

A flow similar to local roaming is also followed in international roaming. When the subscriber terminal notices that it is not within the coverage of the original network of the SIM (Subscriber Identity Module) card, it selects one of the GSM networks having coverage with certain algorithms and tries to receive service from that network. If the selected network has a roaming agreement with the original operator, upon this request of the subscriber terminal, the foreign network VLR sends an UpdateLocation message to the HLR of the original operator. HLR accepts or rejects this request as a result of certain controls such as whether or not the SIM card of the subscriber terminal is allowed to roam with an authorization given in advance.

Since coverage of the foreign operators may also exist within the national boundaries, it is possible for the subscribers to accidentally receive service from the operators of the neighboring countries due to geographical conditions and to the instant problems occurring in the original network. In the case that the subscriber receives service from the neighboring country operator due to the problems in the network, the subscriber continuing to receive service from the neighboring country operator even after the problem in the network is resolved causes the subscriber's invoice to be unnecessarily high due to international roaming.

Mobile terminals comprising SIM cards do not perform any immediate actions to change the network or return to the main network when there is no problem related to the coverage of the current network. Subscribers who start to receive service from the neighboring country operators due to instant problems occurring in the GSM cells or switch center, can not return to the main network instantly unless they move to a location where the coverage of the neighboring country operator is weak or they switch to the main network manually or they turn off and on their telephones depending on the model of their telephones. This in turn causes the subscriber to be unnecessarily priced with the international roaming rates.

Therefore, a subscriber terminal which accidentally starts to receive service from the neighboring country operator should be returned to the local network as soon as possible.

Various applications are developed in the state of the art for eliminating network interferences. One of these is disclosed in the European patent document EP1903828. This document discloses detecting the mobile telephones which roam to a different network and trying to return them to the main network.

In the state of the art United States Patent No. US2006135160A1 discloses a system and method for attempting to register a subscriber to a Home Public Mobile Network (HPMN), wherein the subscriber is in a region having multiple overlapping wireless cellular networks. The invention detects potential registration of the subscriber with a Neighboring visited Public Mobile Network (NPMN), although the HPMN may be present in the region, in response to a registration request from the NPMN and attempts a pre-defined number of rejections upon successful detection.

In the state of the art International Patent No. WO2004014101 discloses a system and apparatus for redirecting wireless network traffic. Embodiments include determining when a roaming mobile station initiates a registration attempt with a non-preferred network and causing the roaming mobile station to initiate a registration attempt with a preferred network. Embodiments further include a traffic redirection network entity including a traffic redirection node, a traffic redirection application, and a traffic redirection probe. Embodiments also include redirecting traffic after a mobile station has registered with a non-preferred network.

### Summary of the Invention

The objective of the present invention is to realize an accidental roaming prevention and correction system which enables to get the GSM subscribers, who involuntarily start to receive service from the neighboring country operators due to the problems in the GSM network, back on the main network after the problem is resolved, without any intervention of the subscriber.

Another objective of the present invention is to realize an accidental roaming prevention and correction system which enables to get the GSM subscriber terminal, which involuntarily starts to receive service from the neighboring country operators, back on the main network when the terminal receives or establishes a new call.

A further objective of the invention is to realize an accidental roaming prevention and correction system wherein the subscriber is not prevented from receiving a call and/or establishing a new call.

Another objective of the invention is to realize an accidental roaming prevention and correction system, which determines the subscribers who have actually crossed into a neighboring country and does not change the network that the terminals of the said subscribers receive service from.

Yet another objective of the invention is to realize an accidental roaming prevention and correction system wherein the pricing problems that might be encountered by the subscribers are minimized.

### Detailed Description of the Invention

The accidental roaming prevention and correction system which is realized to fulfill the objectives of the present invention is illustrated in the accompanying figures wherein:
Figure 1 is the schematic diagram showing the position of the inventive accidental roaming prevention and correction system in the entire network.

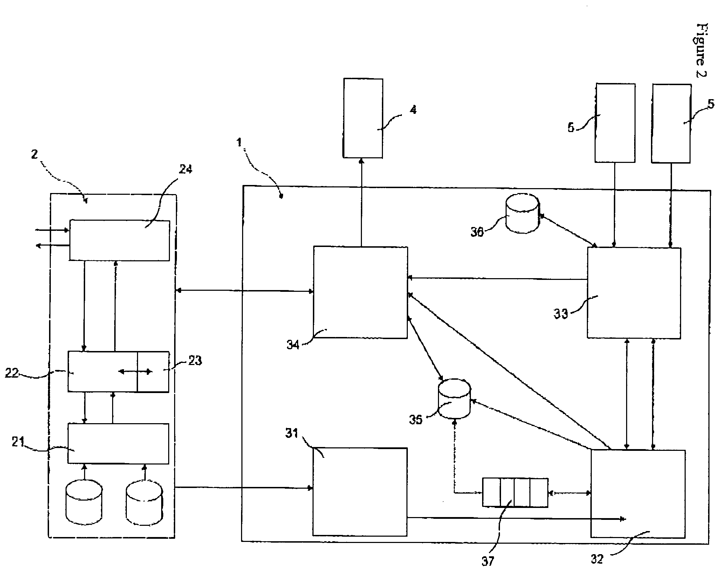

Figure 2 is the schematic diagram of the inventive accidental roaming prevention and correction system.

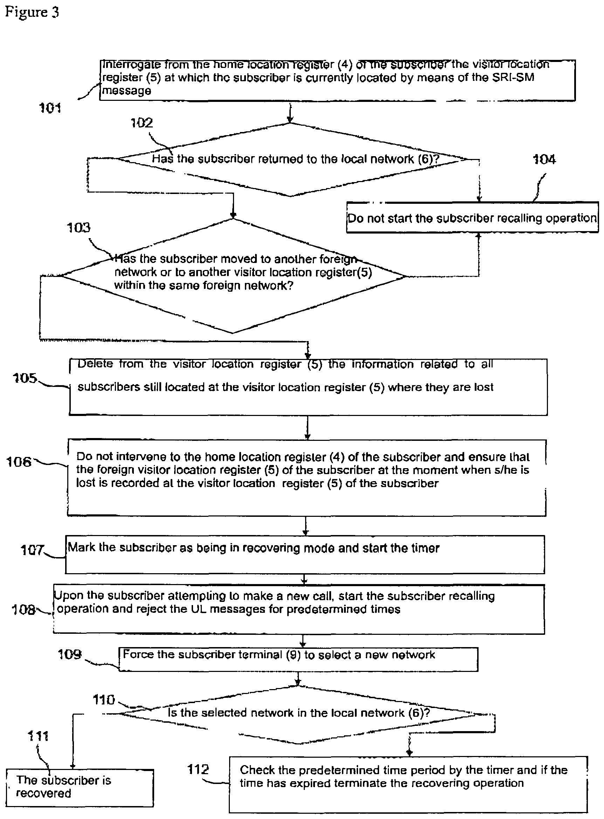

Figure 3 is the flowchart of the operation of the subscriber recovering unit provided in the inventive accidental roaming prevention and correction system.

The parts in the figures are each given a reference numeral where the numerals refer to the following:
1. Accidental roaming prevention and correction system
2. Accidental roaming prevention unit
   21. Subscriber location and state detection unit
   22. Neighboring country border region monitoring unit
   23. Neighboring country border region detection unit
   24. Roaming monitoring and intervention unit
3. Accidental roaming correction unit
   31. Loss detection unit
   32. Loss recording unit
   33. Network monitoring unit
   34. Subscriber recovering unit
   35. Lost subscriber database
   36. Subscriber location area identifier database (LAI database)
   37. Delay unit
4. Home Location Register (HLR)
5. Visitor Location Register (VLR)
6. Local network
7. International network
8. ,81. Foreign network
9. Subscriber terminal

The inventive accidental roaming prevention and correction system (1) comprises an accidental roaming prevention unit (2) and an accidental roaming correction unit (3).

The inventive accidental roaming prevention and correction system (1) is in communication with the home location registers (4) and visitor location registers (5). The visitor location registers (5) belong to a local or foreign network.
The international accidental roaming prevention unit (2) comprises a subscriber location and state detection unit (21), a neighboring country border region monitoring unit (22), a neighboring country border region detection unit (23) and a roaming monitoring and intervention unit (24).

The accidental roaming correction unit (3) comprises a loss detection unit (31), a loss recording unit (32), a network monitoring unit (33), a subscriber recovering unit (34), at least one lost subscriber database (35), at least one subscriber location area identifier database (LAI database) (36) and a delay unit (37).

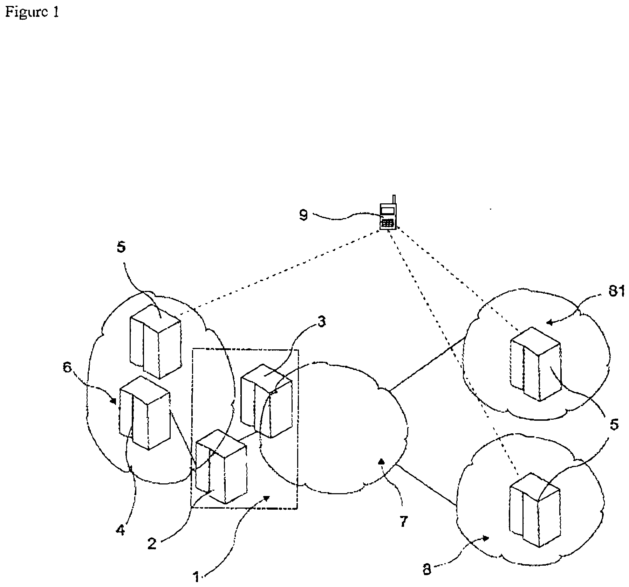

The accidental roaming prevention and correction system (1) is provided between the international network (7), which is the international gateway of the operator, and the local network (6). The international network (7) interconnects the local network (6) and the foreign network (8) (Figure 1).

The local network (6) of the invention denotes the SS7 (Signaling System 7) network used by the service providing local operator.

The international network (7) of the invention denotes the international SS7 (Signaling System 7) network.

The foreign network (8) of the invention denotes the SS7 (Signaling System 7) network used by the foreign operators in the neighboring countries.

The subscriber terminal (9) is a mobile device such as a mobile phone or laptop computer having a SIM card which receives service from the network at which the operator provides service.

In the inventive accidental roaming prevention and correction system (1), the accidental roaming correction unit (3) is in communication with the accidental roaming prevention unit (2). When the accidental roaming prevention unit (2) detects a possibility of an international accidental roaming, it rejects the incoming requests according to predetermined parameters (for example a certain number of requests coming in a certain period of time) and prevents the subscriber terminal (9) from receiving service from the foreign network (8). In the case that even though the determined parameters are exceeded the subscriber terminal (9) still insists on receiving service from the neighboring country operators, the international accidental roaming prevention unit (2) assumes either that the subscriber terminal (9) can not return to the main network due to coverage problems or that it has actually crossed into the neighboring country, and thus allows it to receive service from a foreign network (8) and writes the request into the home location register (4).

The accidental roaming prevention unit (2) reports the subscriber terminals (9), which it has allowed to receive service from a foreign network (8) because they insisted requesting although their request has been rejected many times according to the predetermined parameters, to the accidental roaming correction unit (3).

The accidental roaming information coming from the accidental roaming prevention unit (2) is received by the loss detection unit (31) at the accidental roaming correction unit (3). The accidental roaming prevention unit (2) sends to the loss detection unit (31) the IMSI (International Mobile Subscriber Identity) of the subscriber terminals (9) which it considers to be accidentally roaming, the last visitor location register (5) at which the concerned subscriber terminal (9) was located in the local network (6) and LAI (Location Area Identifier) information thereof, together with the information related to the reason why it has accepted provision of foreign network (8) service.

The loss detection unit (31) controls the conditions in which the lost subscriber will be tried to be recovered. If the request for registration to the home location register (4) is repeated for a longer period than the predetermined period and/or if when making the registration request the request is made to a plurality of foreign networks and/or if the subscriber manually selected a network and/or if the time period between two registration requests is longer than expected; the loss detection unit (31) triggers the accidental roaming correction unit (3) whereby starting the subscriber recovering process.

The loss detection unit (31) informs the loss recording unit (32) regarding the subscriber terminals (9) which are decided to be tried to be recovered.

The loss recording unit (32) decides whether or not the recovering process will be performed for the lost subscriber terminals (9) that are reported to it. It interrogates the last subscriber location area identifiers (LAI) of the reported subscriber terminals (9) in the local network (6), and considering that the subscribers whose location area identifiers (LAI) are in failed state at that moment are lost for that reason, it registers the subscriber terminal (9) to a lost subscriber database (35).

While the lost subscriber database (35) can be a table in the memory of the loss recording module (32) for fast processing, it can also be an external database. The subscriber terminals (9) are classified and kept in the lost subscriber database (35) on the basis of the subscriber location area identifier (LAI). Thanks to this structure thereof, all the subscribers that were lost before can be interrogated from the database for a subscriber location area identifier which, after failing once, becomes functional again.

Even though the subscriber location area identifier (LAI) is up at the moment when it is checked by loss recording unit, it does not have to mean that the subscriber is not lost because of network failure. Since there may be even a small delay in the reporting of error conditions in the network, the subscriber terminals (9) whose subscriber area identifiers (LAI) are functional are sent to a delay unit (37). The delay unit (37) enqueues the coming subscriber terminals (9). For subscribers who leave the queue after a determined period of time, the loss recording unit (32) conducts another interrogation for the last subscriber location area identifier (LAI) in the local network (6). After the second interrogation, if the subscriber location area identifier (LAI) is still in failed state, the loss recording unit (32) records the subscriber terminal (9) to the lost subscriber database (35).

As a last control for the subscribers, whose subscriber location area identifiers (LAI) are functional, the loss recording unit (32) checks whether or not the subscriber location area identifier failed and then became functional again within the period in which the subscriber waits at the delaying queue. It also records the subscribers, who fail and then become functional again within the period in which they wait at the delaying queue, into the lost subscriber database (35). This way, even if the problems arising in the network are reported to the accidental roaming correction unit (3) in a delayed manner, the process is ensured to be carried out without problems.

The network monitoring unit (33) is informed of the errors and solutions in the network. This informing process is carried out by having a database updated by the network monitoring center (not shown in the figures). The network monitoring unit (33) is warned about the cell and visitor location register (5) (VLR) failures in the network.

When the locations of the subscriber terminals (9) are interrogated in the network at any given time from the home location register (4) and the visitor location register (5); the visitor location register (5), subscriber location area identifier (LAI) and cell ID (CID) of the subscriber terminals (9) are obtained.

It is the most logical approach to obtain the cell ID where the subscriber terminal (9) is located and to activate the recovering process for the subscribers who are lost from a cell when that cell fails. However when a request is received from the subscriber terminal (9) to cross into the neighboring country, the ID of the last cell where the subscriber is located can not be accurately obtained by an interrogation made in the network. If the subscriber has not made any calls for a period of time, the cell in which the subscriber is located can only be known approximately. It can also be requested from the network by means of a certain area in the PSI (Provide Subscriber Information) message to specially locate the active cell of the subscriber. However since when a registration request is received from abroad this request will be unsuccessful, the latest cell ID of the subscriber can not be obtained with this method either.

In the invention, the network monitoring unit (33) obtains from the home location register (4) the information related to the last visitor location register (5) at which the subscriber terminal (9) is located by means of the SRI-SM (Send Routing Info-forSM) message. However a single visitor location register (5) might be providing service to a very wide physical area. The subscriber location area identifier (LAI) is the information which shows the smallest physical area that can be considered as the most accurate related to the subscriber. Therefore, for any visitor location register (5) failure, all the subscriber location area identifiers (LAI) belonging to that visitor location register (5) are interrogated by the network monitoring unit (33) from the subscriber location area identifier database (36) and all the subscriber location area identifiers that are found are registered as interrupted.

The subscribers who will be attempted to be recovered are classified and kept in the subscriber location area identifier database (36) on the basis of the subscriber location area identifier (LAI) just as they are in the lost subscriber database (35). With this configuration, when a subscriber location area identifier (LAI) becomes functional, recalling operations are performed from that subscriber location area identifier (LAI) for all the lost subscribers.

The network monitoring unit (33) groups the received cell interruption information on the basis of subscriber location area identifier (LAI) in accordance with the databases (35, 36). Within the scope of a subscriber location area identifier (LAI), when a maximum predetermined (maxₜₕ) number of cell interruptions are activated, the network monitoring unit (33) processes this subscriber location area identifier (LAI) as failed; when the number of interrupted cells drops to a minimum number (minₜₕ), the subscriber location area identifier (LAI) is considered to have become functional and it is processed accordingly. The network monitoring unit (33) reports the subscriber terminals (9), whose subscriber location area identifiers have become functional, to the subscriber recovering unit (34).

The subscriber recovering unit (34) performs recalling operation for all the subscriber terminals that it finds by interrogating the lost subscriber database (35) for the reports received from the network monitoring unit (33) indicating that the subscriber location area identifier (LAI) is functional.

The subscriber recovering unit (34) carries out the following steps for the subscribers to be recalled;
- Interrogating from the home location register (4) of the subscriber the visitor location register (5) at which the subscriber is currently located by means of the SRI-SM message (101),
- Checking whether or not the subscriber has currently returned to the local network (6) (102),
- Checking if the subscriber has moved to another foreign network (81) or to another visitor location register (5) within the same foreign network (8) (103),
- Not starting the subscriber recalling operation if the subscriber has returned to the local network (6) or moved to another foreign network (81) or to another visitor location register (5) within the same foreign network (8) (104),
- Deleting from the visitor location register (5) the information related to all subscribers still located at the visitor location register (5) where they are lost (105),
- Ensuring that the foreign visitor location register (5) of the subscriber at the moment when s/he is lost is recorded as the visitor location register (5) of the subscriber, by not intervening to the home location register (4) of the said subscriber (106),
- Marking the subscriber as being in recovering mode and starting a timer (107),
- Upon the subscriber attempting to make a new call, starting the subscriber recalling operation and rejecting the UL messages coming from the visitor location register (5) where the subscriber is lost, for predetermined times in accordance with the predetermined user parameters (108),
- After a certain number of rejections, enabling the subscriber terminal (9) to select a new network (109),
- Checking whether or not the selected new network is the local network (6) (110),
- If the selected new network is the local network (6), accepting the request and recovering the subscriber (111),
- If the selected new network is not the local network (6), checking the predetermined time period by the timer and if the time has expired completing the recovering operation (112).

By interrogating from the home location register (4) the visitor location register (5) at which the subscriber is currently located by means of the SRI-SM message, it is checked whether or not the subscriber is currently located at the visitor location register (5) at which it was lost. For cases where the subscriber has already returned to the local network (6), recalling operation is not triggered. For cases where the subscriber has moved to another foreign network (81) or to another visitor location register (5) within the same foreign network (8), it is considered that the subscriber is actually located in the neighboring country and the recovering operation is not triggered.

For all subscribers who are currently located at the visitor location register (5) at which they were lost, CL (Cancel Location) MAP message is sent to the said visitor location register (5), whereby information related to the subscriber is deleted from the visitor location register (5). While the message sent can be sent in the name of the home location register (4) depending on the user settings for the network in which the message is sent, it can also be sent in the name of the accidental roaming prevention unit (2). Since the subscriber's home location register (4) is not intervened in any way, the said foreign visitor location register (5) is recorded in the home location register (4) as the visitor location register of the subscriber.

In the case that the said foreign visitor location register (5) is recorded in the home location register (4) of the subscriber, when the home location register (4) is interrogated for the new calls coming to the subscriber, the home location register (4) requests a number from the said foreign visitor location register (5) by means of the PRN (Provide Roaming Number) message to terminate the call. Upon receiving the PRN message, the visitor location register (5) requests the subscriber information by sending Restore Data (RD) message to the home location register (4), since it does not have data regarding the said subscriber (it is deleted by CL message). The home location register (4) sends the subscriber information via ISD (Insert Subscriber Data) messages. After the PRN response is returned to the home location register (4), a call can be established towards the subscriber.

If the subscriber starts a new call when its information is deleted from the visitor location register (5), a new registration request is sent since the visitor location register (5) does not have the information related to the said subscriber. As a result of that, UL (UpdateLocation) messages are sent to the home location register (4) of the subscriber. When the home location register (4) confirms the registration, even if the first call of the subscriber can be unsuccessful, the following calls will be successful since all information of the subscriber in the visitor location register (5) is updated.

When CL message is sent, the subscriber is marked to be in recovering mode and a timer is initiated for the subscriber. When the predetermined period in the timer expires, the recovering mode for the subscriber is terminated.

The messages coming for the subscriber within the period where the subscriber is in recovering mode are processed differently by the accidental roaming prevention unit (2) than the ones coming for the other subscribers. If the UL messages coming for the said subscriber are coming from a visitor location register (5) other than the visitor location register (5) where the subscriber is lost, the subscriber is assumed to be located permanently in the neighboring country and thus her/his registration requests are accepted and registered to the home location register (4).

The UL messages coming from the visitor location register (5) where the subscriber is lost, are triggered by the attempts of the subscriber to make a new call. These messages are rejected by the special user settings established for recalling. These settings are parameters such as with which error codes the messages will be rejected or how many sequential UL messages will be rejected. The number of times that the sequential UL messages will be rejected is determined in advance. When the predetermined number of messages are rejected, the message is perceived as the manual selection of the subscriber and it is accepted.

The subscriber is recovered by rejection of the UL messages coming when s/he is making a call. After a certain number of rejections, the subscriber terminal (9) selects a new network. If the subscriber terminal (9) is in the coverage of the local network (6), this new selection is the local network (6). This way, the subscriber is returned to the original network.

Within the period where the subscriber is in recovering mode, since the incoming RD (RestoreData) messages are triggered when a call comes to the subscriber, these messages are accepted in all cases for the subscriber to be able to receive this call. However, since the RD message restores the subscriber data on the visitor location register (5) of the subscriber, in order to support and trigger recovering with the new calls that the subscriber will make, the subscriber data is deleted once again from the VLR shortly after the RD message.

When the time period predetermined by the timer expires, the concerned subscriber terminal (9) is taken out of the recovering mode and the accidental roaming prevention unit (2) returns to its normal operation for the subscriber terminal.

When the time period predetermined by the timer expires, the home location register (4) of the subscriber is interrogated by means of the SRI-SM message to measure the success of the recovering operation. If the subscriber has returned to the local network (6), it means that the subscriber has been successfully recovered.

If the subscriber recovering operation has not been successful upon expiration of the time period predetermined by the timer, the subscriber recovering unit (34) sends a SRI (SendRoutingInfo) message to the home location register (4) in order for the subscriber data to be updated in the home location register (4). When the home location register (4) sends PRN message to the visitor location register (5), the visitor location register (5) requests the subscriber information once again by sending RD message. Data of the subscriber terminal (9) are updated via the ISD messages of the home location register (4). After this stage, the subscriber continues with its normal operation.

It is possible to develop a wide variety of embodiments of the inventive accidental roaming prevention and correction system (1). The invention cannot be limited to the examples described herein and it is essentially according to the claims.

## Claims

1. An accidental roaming prevention and correction system (1) **comprising**
- accidental roaming prevention means (2) having
- subscriber location and state detection means (21),
- neighboring country border region monitoring means (22),
- neighboring country border region detection means (23)
- roaming monitoring and intervention means (24);
- accidental roaming correction means (3),
- at least one home location register (4),
- a plurality of visitor location registers (5);
**wherein**
- the accidental roaming prevention means (2) is arranged in such a way as to report a subscriber terminal (9), which it has allowed to receive service from a foreign network (8) because such subsciber terminal insisted requesting although its request has been rejected many times according to predetermined parameters, to the accidental roaming correction means (3); and as to send to the loss detection unit (31) the IMSI - International Mobile Subscriber Identity - of the subscriber terminal (9) which it considers to be accidentally roaming, the last visitor location register (5) at which the subscriber terminal (9) was located in the local network (6) and LAI - Location Area Identifier - information thereof, together with the information related to the reason why it has accepted provision of foreign network (8) service; and
- the accidental roaming correction means (3) has:
- loss detection means (31) for controlling whether the request for registration to the home location register (4) is repeated for a longer period than the predetermined period or not and/or whether when making the registration request the request is made to a plurality of foreign networks or not and/or whether a subscriber of said subscriber terminal manually selected a network or not and/or whether the time period between two registration requests is longer than expected or not and triggering the accidental roaming correction means (3) whereby starting recovering of the subscriber terminal (9) if the request for registration to the home location register (4) is repeated for a longer period than the predetermined period and/or if when making the registration request the request is made to a plurality of foreign networks and/or if said subscriber manually selected a network or not and/or whether the time period between two registration requests is longer than expected,
- loss recording means (32) for interrogating the last subscriber location area identifiers of the subscriber terminal (9) in the local network (6) which are reported to it by the loss detection unit (31), and upon considering that the subscriber terminal (9) whose location area identifiers are in failed state at that moment are lost for that reason, registering the subscriber terminal (9) to a lost subscriber database (35),
- network monitoring means (33) for interrogating, for any visitor location register (5) interruption, all the subscriber location area identifiers belonging to that visitor location register (5) from the subscriber location area identifier database (36) and registering these subscriber location areas as interrupted and reports them to the subscriber recovering unit (34),
- subscriber recovering means (34) arranged in such a way as to perform recalling operation for all the subscriber terminals (9) that it finds by interrogating the lost subscriber database (35) for the reports received from the network monitoring unit (33) indicating that the subscriber location area identifier is functional,
- at least one lost subscriber database (35) wherein the information related to the subscriber terminal (9) which will be attempted to be recovered is classified and kept on the basis of the subscriber location area identifier,
- at least one subscriber location area identifier database (36) wherein the information related to the subscriber terminal (9) who will be attempted to be recovered are kept,
- a delay unit (37) into which subscriber terminals (9) whose subscriber location area identifiers are functional are introduced to find out whether they are really functional,
**wherein**
the subscriber recovering means (34) is arranged in such a way as to perform the following steps in order that subscriber terminal (9) is recalled:
- interrogating from a home location register (4) of the subscriber terminal (9) a visitor location register (5) at which the subscriber terminal (9) is currently located by means of the SRI-SM - Send-Routing-Info for Short Message - message,
- checking whether or not the subscriber terminal (9) has currently returned to the local network (6),
- checking if the subscriber terminal (9) has moved to another foreign network (81) or to another visitor location register (5) within the same foreign network (8),
- not starting the subscriber terminal (9) recalling operation if the subscriber terminal (9) has returned to the local network (6) or moved to another foreign network (81) or to another visitor location register (5) within the same foreign network (8),
- deleting from the visitor location register (5) the information related to all subscriber terminals (9) still located at the visitor location register (5) where they are lost,
- ensuring that the foreign visitor location register (5) of the subscriber terminal (9) at the moment when s/he is lost is recorded at the visitor location register (5) of the subscriber terminal (9), without intervening to the home location register (4) of the said subscriber terminal (9),
- marking the subscriber terminal (9) as being in recovering mode and starting a timer,
- upon the subscriber terminal (9) attempting to make a new call, starting the subscriber terminal (9) recalling operation and rejecting the UL - Update Location - messages coming from the visitor location register (5) where the subscriber terminal (9) is lost, for predetermined times in accordance with the predetermined user parameters,
- after a certain number of rejections, enabling the subscriber terminal (9) to select a new network,
- checking whether or not the selected new network is the local network (6),
- if the selected new network is the local network (6), accepting the request and recovering the subscriber terminal (9),
- if the selected new network is not the local network (6), checking the predetermined time period by the timer and if the time has expired completing the recovering operation.

2. An accidental roaming prevention and correction system (1) according to claim 1, **characterized by** loss recording means (32) arranged in such a way as to check whether the subscriber location area identifiers, which are passed through the delay unit (37) because they are functional, fail and then become functional again or not within the period in which they wait at the delaying queue.

3. An accidental roaming prevention and correction system (1) according to claim 1 or claim 2, **characterized by** loss recording means (32) arranged in such a way as to record the subscriber terminal (9), who fails and then becomes functional again within the period in which said subscriber terminal waits at the delaying queue, into the lost subscriber database (35).

4. An accidental roaming prevention and correction system (1) according to any of the preceding claims, **characterized by** network monitoring means (33) arranged in such a way as to process subscriber location area identifier -LAI- as failed when a maximum predetermined (maxₜₕ) number of cell interruptions are activated within the scope of a subscriber location area identifier -LAI-.

5. An accidental roaming prevention and correction system (1) according to any of the preceding claims, **characterized by** network monitoring means (33) arranged in such a way as to process subscriber location area identifier - LAI - as functional when the number of interrupted cells drops to a minimum number - minₜₕ-.

6. An accidental roaming prevention and correction system (1) according to any of the preceding claims, **characterized by** accidental roaming prevention means (2) arranged in such a way as to accept the registration requests of subscriber terminal (9) and register it (9) to home location register if the UL - Update Location - messages received in the period where the subscriber terminal (9) is in recovering mode are coming from a visitor location register (5) other than the visitor location register (5) where the subscriber terminal (9) is lost.

## Patentansprüche

1. System (1) zur Verhinderung und Korrektur von versehentlichem Roaming, wobei das System umfasst:
- ein Mittel (2) zur Verhinderung von versehentlichem Roaming, das aufweist:
- ein Mittel (21) zur Erfassung des Standorts und des Status eines Teilnehmers,
- ein Mittel (22) zur Überwachung des Grenzbereichs eines Nachbarlandes,
- ein Mittel (23) zur Erfassung des Grenzbereichs eines Nachbarlandes,
- ein Mittel (24) für Roaming-Überwachung und -Eingriff;
- ein Mittel (3) zur Korrektur von versehentlichem Roaming, das aufweist:
- wenigstens ein Heimatstandort-Verzeichnis (4),
- eine Mehrzahl von Besucherstandort-Verzeichnissen (5);
**wobei**
- das Mittel (2) zur Verhinderung von versehentlichem Roaming derart ausgerichtet ist, dass ein Teilnehmer-Endgerät (9), dem erlaubt wurde, Dienste von einem ausländischen Netzwerk (8) zu empfangen, weil das Teilnehmer-Endgerät auf eine Anfrage beharrte, obwohl seine Anfrage mehrere Male gemäß vorbestimmten Parametern abgelehnt worden ist, an das Mittel (3) zur Korrektur von versehentlichem Roaming berichtet wird; und derart, dass die internationale Mobilteilnehmeridentität (IMSI, International Mobile Subscriber Identity) des Teilnehmer-Endgeräts (9), bei dem von einem versehentlichen Roaming ausgegangen wird, das Besucherstandort-Verzeichnis (5), in dem das Teilnehmer-Endgerät (9) in dem lokalen Netzwerk (6) seinen letzten Standort hatte, und Informationen zur Standortbereichskennung (LAI, Location Area Identifier) davon zusammen mit Informationen darüber, warum es die Bereitstellung ausländischer Netzwerk (8) -Dienste akzeptiert hat, an eine Verlusterfassungseinheit (31) gesendet werden; und
- das Mittel (3) zur Korrektur von versehentlichem Roaming aufweist:
- ein Verlusterfassungsmittel (31) zum Überprüfen, ob die Registrierungsanfrage an das Heimatstandort-Verzeichnis (4) über einen Zeitraum, der länger ist als der vorbestimmte Zeitraum, wiederholt wird oder nicht, und/oder ob, wenn die Registrierungsanfrage gestellt wird, die Registrierungsanfrage an eine Mehrzahl von ausländischen Netzwerken gestellt wird oder nicht, und/oder ob ein Teilnehmer des Teilnehmer-Endgeräts ein Netzwerk manuell ausgewählt hat oder nicht, und/oder ob der Zeitraum zwischen zwei Registrierungsanfragen länger als erwartet ist oder nicht, und zum Auslösen des Mittels (3) zur Korrektur von versehentlichem Roaming, wodurch eine Wiederherstellung des Teilnehmer-Endgeräts (9) gestartet wird, falls die Registrierungsanfrage an das Heimatstandort-Verzeichnis (4) über einen Zeitraum, der länger ist als der vorbestimmte Zeitraum, wiederholt wird, und/oder falls, wenn die Registrierungsanfrage gestellt wird, die Registrierungsanfrage an eine Mehrzahl von ausländischen Netzwerken gestellt wird, und/oder falls der Teilnehmer des Teilnehmer-Endgeräts ein Netzwerk manuell ausgewählt hat, und/oder falls der Zeitraum zwischen zwei Registrierungsanfragen länger als erwartet ist,
- ein Verlustaufzeichnungmittel (32) zum Abfragen der letzten Teilnehmerstandortbereichskennungen des Teilnehmer-Endgeräts (9) in dem lokalen Netzwerk (6), welche von der Verlusterfassungseinheit (31) an es berichtet wurden, und wenn davon ausgegangen wird, dass das Teilnehmer-Endgerät (9), dessen Standortbereichskennungen in einem Fehlerzustand sind, aus diesem Grund in diesem Moment verloren geht, zum Aufnehmen des Teilnehmer-Endgeräts (9) in eine Datenbank (35) für verlorene Teilnehmer,
- ein Netzwerküberwachungsmittel (33) zum Abfragen, für jede Besucherstandort-Verzeichnis (5) -Unterbrechung, von allen Teilnehmerstandortbereichskennungen, die zu diesem Besucherstandort-Verzeichnis (5) gehören, bei einer Datenbank (36) für Teilnehmerstandortbereichskennungen, zur Registrierung dieser Teilnehmerstandortbereiche als unterbrochen, und zum Berichten derselben an eine Teilnehmerwiederherstellungseinheit (34),
- das Teilnehmerwiederherstellungsmittel (34) derart ausgerichtet ist, dass ein Wiederholungsrufvorgang durchgeführt wird für all diejenigen Teilnehmer-Endgeräte (9), die es findet durch Abfragen der Datenbank (35) für verlorene Teilnehmer nach den empfangenen, von einer Netzwerküberwachungseinheit (33) stammenden Berichten, die darauf hinweisen, dass die Teilnehmerstandortbereichskennung funktional ist,
- wenigstens eine Datenbank (35) für verlorene Teilnehmer, wobei die mit dem Teilnehmer-Endgerät (9) in Verbindung stehenden Informationen, bei denen eine Wiederherstellung versucht wird, vertraulich sind und auf der Basis der Teilnehmerstandortbereichskennung aufbewahrt werden,
- wenigstens eine Datenbank (36) für Teilnehmerstandortbereichskennungen, wobei die mit dem Teilnehmer-Endgerät (9) in Verbindung stehenden Informationen, bei denen eine Wiederherstellung versucht wird, aufbewahrt werden,
- eine Verzögerungseinheit (37), in die die Teilnehmer-Endgeräte (9), deren Teilnehmerstandortbereichskennungen funktional sind, eingetragen werden, um herauszufinden, ob sie tatsächlich funktional sind,
**wobei**
das Teilnehmerwiederherstellungsmittel (34) derart ausgerichtet ist, dass es die folgenden Schritte nacheinander ausführt, damit ein Wiederholungsruf an das Teilnehmer-Endgerät (9) erfolgt:
- Abfragen, bei einem Heimatstandort-Verzeichnis (4) des Teilnehmer-Endgeräts (9), eines Besucherstandort-Verzeichnisses (5), in dem sich der aktuelle Standort des Teilnehmer-Endgeräts (9) befindet, mit Hilfe einer SRI-SM-Mitteilung (Send-Routing-Info for Short Message),
- Überprüfen, ob das Teilnehmer-Endgerät (9) aktuell in das lokale Netzwerk (6) zurückgekehrt ist oder nicht,
- Überprüfen, ob das Teilnehmer-Endgerät (9) sich in ein anderes ausländisches Netzwerk (81) oder in ein anderes Besucherstandort-Verzeichnis (5) innerhalb des selben ausländischen Netzwerks (3) bewegt hat,
- Kein Starten des Wiederholungsrufvorgangs des Teilnehmer-Endgeräts (9), falls das Teilnehmer-Endgerät (9) in das lokale Netzwerk (6) zurückgekehrt ist oder sich in ein anderes ausländisches Netzwerk (81) oder in ein anderes Besucherstandort-Verzeichnis (5) innerhalb des selben ausländischen Netzwerks (8) bewegt hat,
- Löschen, aus dem Besucherstandort-Verzeichnis (5), aller Informationen, die mit allen Teilnehmer-Endgeräten (9) in Verbindung stehen, deren Standort immer noch in dem Besucherstandort-Verzeichnis (5) ist, wo sie verloren sind,
- Sicherstellen, dass das ausländische Besucherstandort-Verzeichnis (5) des Teilnehmer-Endgeräts (9) in dem Moment, wo es verloren geht, in dem Besucherstandort-Verzeichnis (5) des Teilnehmer-Endgeräts (9) aufgezeichnet wird, ohne in das Heimatstandort-Verzeichnis (4) des Teilnehmer-Endgeräts (9) einzugreifen,
- Markieren des Teilnehmer-Endgeräts (9) als im Wiederherstellungsmodus befindlich und Starten eines Timers,
- bei einem Versuch des Teilnehmer-Endgeräts (9), einen neuen Anruf zu tätigen, Starten des Teilnehmer-Endgerät (9) -Wiederholungsrufvorgangs und Abweisen der Standortaktualisierungsmitteilungen (UL, Update Location Messages), die von dem Besucherstandort-Verzeichnis (5) kommen, wo das Teilnehmer-Endgerät (9) verloren ist, für eine vorbestimmte Antahl von Malen gemäß vorbestimmten Nutzerparametern,
- nach einer bestimmten Anzahl von Abweisungen in die Lage Versetzen des Teilnehmer-Endgeräts (9), ein neues Netzwerk auszuwählen,
- Überprüfen, ob es sich bei dem ausgewählten neuen Netzwerk um das lokale Netzwerk (6) handelt oder nicht,
- wenn es sich bei dem ausgewählten neuen Netzwerk um das lokale Netzwerk (6) handelt, Akzeptieren der Anfrage und Wiederherstellen des Teilnehmer-Endgeräts (9),
- wenn es sich bei dem ausgewählten neuen Netzwerk nicht um das lokale Netzwerk (6) handelt, Überprüfen des vorbestimmten Zeitraums durch den Timer, und wenn die Zeit abgelaufen ist, Vollenden des Wiederherstellungsvorgangs.

2. System (1) zur Verhinderung und Korrektur von versehentlichem Roaming gemäß Anspruch 1, das **dadurch gekennzeichnet ist, dass** das Verlustaufzeichnungmittel (33) derart ausgerichtet ist, dass es überprüft, ob die Teilnehmerstandortbereichskennungen, die durch die Verzögerungseinheit (37) weitergeleitet werden, weil sie funktional sind, innerhalb des Zeitraums, während dem sie in der Verzögerungswarteschlage warten, fehlschlagen und dann wieder funktional werden oder nicht.

3. System (1) zur Verhinderung und Korrektur von versehentlichem Roaming gemäß Anspruch 1 oder 2, das **dadurch gekennzeichnet ist, dass** das Verlustaufzeichnungmittel (33) derart ausgerichtet ist, dass es das Teilnehmer-Endgerät (9), das innerhalb des Zeitraums, während dem es in der Verzögerungswarteschlage wartet, fehlschlägt und wieder funktional wird, in die Datenbank (35) für verlorene Teilnehmer aufnimmt.

4. System (1) zur Verhinderung und Korrektur von versehentlichem Roaming gemäß einem der vorangegangenen Ansprüche, das **dadurch gekennzeichnet ist, dass** das Netzwerküberwachungsmittel (33) derart ausgerichtet ist, dass Teilnehmerstandortbereichskennungen (LAI) als fehlgeschlagen verarbeitet werden, wenn eine maximale vorbestimmte Anzahl (maxₜₕ) von Funkzellenunterbrechungen im Anwendungsbereich einer Teilnehmerstandortbereichskennung (LAI) aktiviert ist.

5. System (1) zur Verhinderung und Korrektur von versehentlichem Roaming gemäß einem der vorangegangenen Ansprüche, das **dadurch gekennzeichnet ist, dass** das Netzwerküberwachungsmittel (33) derart ausgerichtet ist, dass Teilnehmerstandortbereichskennungen (LAI) als funktional verarbeitet werden, wenn die Anzahl der unterbrochenen Funkzellen auf eine minimale Anzahl (minₜₕ) sinkt.

6. System (1) zur Verhinderung und Korrektur von versehentlichem Roaming gemäß einem der vorangegangenen Ansprüche, das **dadurch gekennzeichnet ist, dass** das Mittel (2) zur Verhinderung von versehentlichem Roaming derart ausgerichtet ist, dass die Regeistrierungsanfragen des Teilnehmer-Endgeräts (9) akzeptiert werden und das Teilnehmer-Endgerät (9) in das Heimatstandort-Verzeichnis registriert wird, wenn die UL-Mitteilungen (Update Location), die in dem Zeitraum empfangen werden, während dem das Teilnehmer-Endgerät (9) sich im Wiederherstellungsmodus befindet, von einem Besucherstandort-Verzeichnis (5) kommen, wo das Teilnehmer-Endgerät (9) verloren ist.

## Revendications

1. Système de prévention et de correction d'itinérance accidentelle (1) comprenant
- un moyen de prévention d'itinérance accidentelle (2) présentant
- un moyen de localisation d'abonné et de détection d'état (21),
- un moyen de surveillance de région frontalière avoisinante (22),
- un moyen de détection de région frontalière avoisinante (23)
- un moyen de surveillance d'itinérance et d'intervention (24) ;
- un moyen de correction d'itinérance accidentelle (3),
- au moins un registre de localisation nominal (4),
- une pluralité de registres de localisation de visiteurs (5) ;
dans lequel
- le moyen de prévention d'itinérance accidentelle (2) est agencé de manière à signaler un terminal d'abonné (9), qu'il a autorisé à recevoir un service en provenance d'un réseau étranger (8) parce que ce terminal d'abonné a persisté dans sa demande bien que sa demande ait été rejetée plusieurs fois en fonction de paramètres prédéterminés, au moyen de correction d'itinérance accidentelle (3) ; et de manière à envoyer à l'unité de détection de perte (31) l'identité internationale d'abonné mobile (IMSI) du terminal d'abonné (9) qu'il considère comme étant en itinérance accidentelle, le dernier registre de localisation de visiteurs (5) auquel le terminal d'abonné (9) a été localisé dans le réseau local (6) et des informations d'identifiant de zone de localisation (LAI) de celui-ci, conjointement avec les informations concernant la raison pour laquelle il a accepté la fourniture d'un service de réseau étranger (8) ; et
- le moyen de correction d'itinérance accidentelle (3) présente :
- un moyen de détection de perte (31) pour contrôler si la demande d'enregistrement auprès du registre de localisation nominal (4) est réitérée sur une plus longue période que la période prédéterminée ou pas et/ou si lors de la mise en oeuvre de la demande d'enregistrement, la demande est faite auprès d'une pluralité de réseaux étrangers ou pas et/ou si un abonné dudit terminal d'abonné a sélectionné manuellement un réseau ou pas et/ou si le délai entre deux demandes d'enregistrement est plus long que prévu ou pas et le déclenchement du moyen de correction d'itinérance accidentelle (3) au moyen duquel est lancée la récupération du terminal d'abonné (9) si la demande d'enregistrement auprès du registre de localisation nominal (4) est réitérée sur une période plus longue que la période prédéterminée et/ou si lors de la mise en oeuvre de la demande d'enregistrement, la demande est faite auprès d'une pluralité de réseaux étrangers et/ou si ledit abonné a sélectionné manuellement un réseau ou pas et/ou si le délai entre deux demandes d'enregistrement est plus long que prévu,
- un moyen d'enregistrement de perte (32) pour interroger les derniers identifiants de zone de localisation d'abonnés du terminal d'abonné (9) dans le réseau local (6) qui lui sont signalés par l'unité de détection de perte (31), et lorsqu'il est considéré que le terminal d'abonné (9) dont les identifiants de zone de localisation se trouvent dans un état d'échec à cet instant sont perdus pour cette raison, enregistrer le terminal d'abonné (9) auprès de la base de données d'abonnés perdus (35),
- un moyen de surveillance de réseau (33) pour interroger, pour toute interruption de registre de localisation de visiteurs (5), tous les identifiants de zone de localisation d'abonnés relevant de ce registre de localisation de visiteurs (5) à partir de la base de données d'identifiants de zone de localisation d'abonnés (36) et enregistrer ces zones de localisation d'abonnés en tant qu'interrompues et les signale à l'unité de récupération d'abonnés (34),
- un moyen de récupération d'abonnés (34) agencé de manière à réaliser une opération de rappel pour tous les terminaux d'abonnés (9) qu'il trouve en interrogeant la base de données d'abonnés perdus (35) pour les signalements reçus en provenance de l'unité de surveillance de réseau (33) indiquant que l'identifiant de zone de localisation d'abonnés est fonctionnel,
- au moins une base de données d'abonnés perdus (35) dans laquelle les informations concernant le terminal d'abonné (9) que l'on essaiera de récupérer sont classifiées et gardées sur la base de l'identifiant de zone de localisation d'abonnés,
- au moins une base de données d'identifiants de zone de localisation d'abonnés (36) dans laquelle les informations concernant le terminal d'abonné (9) que l'on essaiera de récupérer sont gardées,
- une unité de retard (37) dans laquelle des terminaux d'abonnés (9) dont les identifiants de zone de localisation d'abonnés sont fonctionnels sont présentés pour découvrir s'ils sont vraiment fonctionnels,
dans lequel
le moyen de récupération d'abonnés (34) est agencé de manière à réaliser les étapes suivantes afin qu'un terminal d'abonné (9) soit rappelé:
- interroger à partir d'un registre de localisation nominal (4) du terminal d'abonné (9) un registre de localisation de visiteurs (5) au niveau duquel le terminal d'abonné (9) est actuellement localisé au moyen du message d'informations de routage d'émission pour des messages courts (SRI-SM),
- vérifier si oui ou non le terminal d'abonné (9) est actuellement revenu au réseau local (6),
- vérifier si le terminal d'abonné (9) s'est déplacé vers un autre réseau étranger (81) ou vers un autre registre de localisation de visiteurs (5) au sein du même réseau étranger (8),
- ne pas relancer l'opération de rappel de terminal d'abonné (9) si le terminal d'abonné (9) est revenu au réseau local (6) ou s'est déplacé vers un autre réseau étranger (81) ou vers un autre registre de localisation de visiteurs (5) au sein du même réseau étranger (8),
- effacer du registre de localisation de visiteurs (5) les informations concernant tous les terminaux d'abonnés (9) toujours situés au niveau du registre de localisation de visiteurs (5) où ils sont perdus,
- s'assurer que le registre de localisation de visiteurs étranger (5) du terminal d'abonné (9) à l'instant où il/elle est perdu soit enregistré auprès du registre de localisation de visiteurs (5) du terminal d'abonné (9), sans intervenir auprès du registre de localisation nominal (4) dudit terminal d'abonné (9),
- marquer le terminal d'abonné (9) comme étant en mode de récupération et lancer un minuteur,
- lorsque le terminal d'abonné (9) tente de procéder à un nouvel appel, lancer l'opération de rappel du terminal d'abonné (9) et rejeter les messages de mise à jour de localisation (UL) provenant du registre de localisation de visiteurs (5) où le terminal d'abonné (9) est perdu, pendant des durées prédéterminées en fonction des paramètres utilisateur prédéterminés,
- après un certain nombre de rejets, permettre au terminal d'abonné (9) de sélectionner un nouveau réseau,
- vérifier si oui ou non le nouveau réseau sélectionné est le réseau local (6),
- si le nouveau réseau sélectionné est le réseau local (6), accepter la demande et récupérer le terminal d'abonné (9),
- si le nouveau réseau sélectionné n'est pas le réseau local (6), vérifier le délai prédéterminé par le minuteur et si le temps s'est écoulé, accomplir l'opération de récupération.

2. Système de prévention et de correction d'itinérance accidentelle (1) selon la revendication 1, **caractérisé par** un moyen d'enregistrement de perte (32) agencé de manière à vérifier si les identifiants de zone de localisation d'abonnés, qui passent par l'unité de retard (37) parce qu'ils sont fonctionnels, échouent puis deviennent fonctionnels à nouveaux ou pas au sein de la période dans laquelle ils attendent dans la file d'attente.

3. Système de prévention et de correction d'itinérance accidentelle (1) selon la revendication 1 ou la revendication 2, **caractérisé par** un moyen d'enregistrement de perte (32) agencé de manière à enregistrer le terminal d'abonné (9) qui échoue puis devient fonctionnel à nouveau au sein de la période dans laquelle ledit terminal d'abonné attend dans la file d'attente, dans la base de données d'abonnés perdus (35).

4. Système de prévention et de correction d'itinérance accidentelle (1) selon l'une quelconque des revendications précédentes, **caractérisé par** un moyen de surveillance de réseau (33) agencé de manière à traiter un identifiant de zone de localisation d'abonnés (LAI) comme ayant échoué lorsqu'un nombre prédéterminé maximal (maxₜₕ) d'interruptions cellulaires est activé dans les limites d'un identifiant de zone de localisation d'abonnés (LAI).

5. Système de prévention et de correction d'itinérance accidentelle (1) selon l'une quelconque des revendications précédentes, **caractérisé par** un moyen de surveillance de réseau (33) agencé de manière à traiter un identifiant de zone de localisation d'abonnés (LAI) comme fonctionnel lorsque le nombre de cellules interrompues chute jusqu'à un nombre minimal (minth).

6. Système de prévention et de correction d'itinérance accidentelle (1) selon l'une quelconque des revendications précédentes, **caractérisé par** un moyen de prévention d'itinérance accidentelle (2) agencé de manière à accepter les demandes d'enregistrement d'un terminal d'abonné (9) et de l'enregistrer (9) auprès du registre de localisation nominal si les messages de mise à jour de localisation (UL) reçus au sein de la période où le terminal d'abonné (9) est en mode de récupération proviennent d'un registre de localisation de visiteurs (5) autre que le registre de localisation de visiteurs (5) où le terminal d'abonné (9) est perdu.
